Europäisches Patentamt

European Patent Office

Office européen des brevets

(19)

(11) Veröffentlichungsnummer: **0 187 405 B1**

(12) **EUROPÄISCHE PATENTSCHRIFT**

(45) Veröffentlichungstag der Patentschrift: **14.03.90**

(51) Int. Cl.⁵: **C 03 B 37/018**

(21) Anmeldenummer: **85201944.7**

(22) Anmeldetag: **25.11.85**

(54) **Verfahren zur Herstellung von Lichtleitfasern.**

(30) Priorität: **12.12.84 DE 3445239**

(43) Veröffentlichungstag der Anmeldung:
**16.07.86 Patentblatt 86/29**

(45) Bekanntmachung des Hinweises auf die
Patenterteilung:
**14.03.90 Patentblatt 90/11**

(84) Benannte Vertragsstaaten:
**DE FR GB IT NL SE**

(56) Entgegenhaltungen:
**EP-A-0 112 549**
**EP-A-0 132 011**
**FR-A-2 380 996**
**GB-A-2 118 165**

(73) Patentinhaber: **Philips Patentverwaltung GmbH**
**Wendenstrasse 35 Postfach 10 51 49**
**D-2000 Hamburg 1 (DE)**
(84) **DE**

(73) Patentinhaber: **N.V. Philips'**
**Gloeilampenfabrieken**
**Groenewoudseweg 1**
**NL-5621 BA Eindhoven (NL)**
(84) **FR GB IT NL SE**

(72) Erfinder: **Geittner, Peter, Dr.**
**Ronheiderweg 26**
**D-5100 Aachen (DE)**
Erfinder: **Weling, Alfred, Dr.**
**Birkenweg 5**
**B-4700 Eupen (BE)**

(74) Vertreter: **Piegler, Harald, Dipl.-Chem. et al**
**Philips Patentverwaltung GmbH Wendenstrasse**
**35 Postfach 10 51 49**
**D-2000 Hamburg 1 (DE)**

Courier Press, Leamington Spa, England.

# EP 0 187 405 B1

## Beschreibung

Die Erfindung betrifft ein Verfahren zur Herstellung von Lichtleitfasern, bei dem auf der Innenwandung eines auf eine Temperatur zwischen 1100 und 1300°C erwärmten Glasrohres schichtweise Glas abgeschieden wird, indem ein reaktives Gasgemisch bei einem Druck zwischen 1 und 30 hPa durch das Glasrohr geleitet wird, während im Innern des Glasrohres ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden.

Unter "Glasrohr" ist in diesem Zusammenhang ein Substratrohr oder Beschichtungsrohr zu verstehen, das entweder aus synthetisch hergestelltem oder aus aus Quarzkristallen durch Schmelzen hergestelltem amorphem Quarz (Schmelzkieselsäure, Quarzglas), der gegebenenfalls dotiert ist, besteht, oder das sowohl aus synthetisch hergestelltem als auch aus aus Quarzkristallen durch Schmelzen hergestelltem amorphem Quarz (Schmelzkieselsäure, Quarzglas), der gegebenenfalls dotiert ist, besteht.

Mit dem zuvor angegebenen Verfahren sind sowohl Gradientenindexfasern als auch Stufenindexfasern herstellbar, wobei dem jeweiligen Faseraufbau entsprechende Mengen Glas abgeschieden werden.

Die Herstellung von Lichtleitfasern bzw. optischen Wellenleitern nach dem zuvor angegebenen Verfahren ist u.a. aus den US—PS Re 30 635 und 43 14 833 bekannt. Diese Herstellungsweise wird in der Praxis als "nichtisothermes Plasma-CVD-Verfahren" (nichtisothermes PCVD-Verfahren, wobei P = Plasma und CVD = Chemical Vapour Deposition = reaktive Abscheidung aus der Gasphase) bezeichnet. Bei diesem Verfahren werden aus der Gasphase Glasschichten direkt auf der Innenwandung des Glasrohres abgeschieden (heterogene Reaktion). Hierbei wird die Bildung von Glasruß in der Gasphase vermieden; dies ist insbesondere in der US—PS 43 14 833 näher beschrieben.

Der wesentliche Unterschied zwischen dem PCVD-Verfahren und dem ebenfalls zur Herstellung von Lichtleitfasern durch Innenbeschichtung eines Rohres angewendeten MCVD-Verfahren liegt in der Art und Weise, wie die für die Abscheidung der Glaskomponenten notwendigen chemischen Reaktionen angeregt werden: Während das MCVD-Verfahren von thermischen Anregungen durch einen Brenner ausgeht, nutzt das PCVD-Verfahren Elektronenstoßanregungen aus. Beim MCVD-Verfahren entstehen im wesentlichen primär feine Staubteilchen (Glasruß), deren Abscheidung im Temperatur-und Schwerefeld entlang des Rohres über einem ausgedehnten Bereich, und über dem Rohrumfang nur dann gleichmäßig erfolgt, wenn das Rohr rotiert wird; zur Erzielung kompakter Schichten muß das abgeschiedene Material nachträglich gesintert werden. Im Gegensatz hierzu tritt bei der Elektronenstoßanregung des PCVD-Verfahrens die Bildung feiner Staubteilchen nicht ein; vielmehr liegen die gasförmigen Reaktionsprodukte in molekularer Form vor und können über relativ schnelle Diffusion zur Innenwand des normalerweise benutzten $SiO_2$-Rohres gelangen und dort auch kondensieren. Demzufolge ist die Abscheidung eng lokalisiert und über dem Rohrumfang gleichmäßig; eine nachträgliche Sinterung ist nicht nötig. Das ist auch der Grund dafür, daß beim PCVD-Verfahren in beiden Bewegungsrichtungen des Plasmas Glas abgeschieden werden kann, während beim MCVD-Verfahren nur in einer Richtung, und zwar in der Strömungsrichtung der reaktiven Gase, Glasteilchen, abgeschieden werden können.

Die Wirtschaftlichkeit beider technologischer Verfahren zur Herstellung von Vorformen für optische Lichtleitfasern wird entscheidend durch die prozeßspezifisch erreichbaren Prozeßausbeuten bestimmt. Wesentliche Parameter sind in diesem Zusammenhang die Reproduzierbarkeit der Prozeßführung, die chemische Reaktionsausbeute, die Abscheidungsgeschwindigkeit und die optische und geometrische Homogenität des abgeschiedenen Materials über der Vorformlänge.

Aufgrund der speziellen Reaktions- und Abscheidungs-mechanismen erlaubt das PCVD-Verfahren die Herstellung optisch hochwertiger Vorformen mit hoher Reproduzierbarkeit, Reaktionsausbeuten nahe 100% und im Vergleich zu anderen Verfahren geringen Endtaperverlusten. Unter Endtapern sind Abscheidungsbereiche mit nicht ausreichend konstanten optischen und geometrischen Eigenschaften an beiden Vorformenden zu verstehen; der übrige Vorformbereich wird im folgenden als homogener Plateaubereich bezeichnet. Da der Transport zur Rohrwand beim PCVD-Verfahren durch schnelle, molekulare Diffusionsmechanismen bestimmt wird, ist die Ausdehnung der Abscheidung in Längsrichtung des Substratrohres naturgemäß eng begrenzt; homogene Plateaubereiche ergeben sich dadurch, daß die Reaktionszone mit konstanter Geschwindigkeit in Längsrichtung des Rohres hin- und herbewegt wird und die für die Hubumkehr notwendigen Bereiche nichtkonstanter Geschwindigkeit an den Vorformenden so klein wie möglich gewählt werden.

Diese Bedingungen führen beim PCVD-Verfahren bei Abscheideraten von etwa 0,5 g/min und Vorformlängen von etwa 70 cm zu niedrigen relativen Ausbeuteverlusten durch Endtaper von etwa 15%, d.h. zu einer Endtaperlänge von etwa 10 cm. Die Endtaperlänge wird dabei aus praktischen Gründen als der Abstand zwischen den Orten, an denen die lokale Massenbelegung durch Abscheidung 10% und 90% des Maximalwertes im Plateaubereich beträgt, definiert.

Aufgrund der unterschiedlichen Reaktions- und Transportmechanismen liegen beim MCVD-Verfahren völlig andere Verhältnisse vor, die — insbesondere wegen der Bildung von Glasruß durch eine homogene Gasphasenreaktion — zu in Längsrichtung des Rohres ausgedehnten Abscheidungsverteilungen führen und damit zusätzliche Maßnahmen zur Reduktion von Endtaperverlusten erforderlich machen.

Aus der GB—A—21 18 165 ist als Maßnahme zur Taperreduktion beim MCVD-Verfahren eine variable Geschwindigkeit des Brenners entlang des Rohres, d.h. eine nichtlineare Bewegung auf mechanische Weise bekannt. Die Art der Bewegung wird dabei in Abhängigkeit von der jeweiligen spezifischen Abscheidungsfunktion vorgegeben, die beim MCVD-Verfahren komplex von allen Abscheidungsparametern abhängt und mit einem Iterationsverfahren experimentell für die speziell vorliegenden Abscheidungsbedingungen ermittelt werden muß. In allen Fällen ist eine spezielle nichtlineare Bewegungsform über der gesamten Abscheidungslänge erforderlich. Andere Möglichkeiten der Taperreduktion, z.B. Flußänderungen oder lineare mechanische Rampen, worunter eine Verlangsamung der Brennergeschwindigkeit am Rohreingangzu verstehen ist, werden zwar diskutiert, aber für kaum durchführbar bzw. in ihrer Wirkung nicht ausreichend beurteilt. Der Grund dafür — und demzufolge für die oben aufgelisteten, speziellen Maßnahmen — ist im MCVD-Verfahren selbst zu finden, und zwar wegen folgender spezifischer Eigenschaften dieses Verfahrens:

— Die Partikelgrößenverteilung und das Einbauverhalten für $SiO_2$ und Dotierungen hängen beim MCVD-Verfahren wegen des thermischen Reaktionsablaufs mit Glasrußbildung in außerordentlich komplexer Weise von sämtlichen Prozeßparametern ab; demzufolge kann die Abscheidungsfunktion hier nur experimentell bestimmt — nicht aber quantitativ theoretisch berechnet — werden.

— Die Glasrußbildung, die mit Abscheidungsausbeuten für $SiO_2$ verbunden ist, die unter 100% liegen, führt dazu, daß die lokalen Abscheidungsprofile beim MCVD-Verfahren größer sind als die Hublängen längs des Rohres, d.h. Staubteilchen treten in größerem Umfang auch noch aus dem Rohrende aus. Als Konsequenz daraus muß zur Erzielung einigermaßen konstanter Schichtdicken der Brenner über der gesamten Hublänge nichtlinear bewegt werden; ein homogener Plateaubereich im eigentlichen Sinne existiert beim MCVD-Verfahren nicht.

— Eine Variation anderer Prozeßparameter als der Brennergeschwindigkeit zur Taperreduktion ändert — wiederum infolge des komplexen Einbau-, Ausbeute- und Staubteilchengrößenverhaltens — direkt das Abscheidungsprofil bzw. die Abscheidungsfunktion, den Dotierungseinbau und die Ausbeuten — und zwar gleichzeitig. Derartige Variationen sind demzufolge beim MCVD-Verfahren schwer kontrollierbar und nicht ohne negative Auswirkungen auf die optische Qualität und Homogenität durchführbar.

Wie den vorangehenden Ausführungen über den Stand der Technik entnommen werden kann, bietet das PCVD-Verfahren bezüglich der Endtaperverluste prozeßintrinsische Vorteile, die die beim MCVD-Verfahren angewendeten aufwendigen und problematischen Maßnahmen zur Taperreduktion und zur Erzielung homogener Plateaubereiche in den Vorformen nicht erforderlich machen.

Dennoch ist es auch beim PCVD-Verfahren wünschenswert, die Endtaperverluste weiter zu reduzieren und damit die Prozeßausbeuten weiter zu erhöhen. Insbesondere ist anzustreben, daß bei Erhöhung der Abscheidungsraten auf Werte oberhalb 0,5 g/min auch unter den dann vorliegenden Prozeßbedingungen die relativen Endtaperverluste ausreichend klein (d.h. typischerweise < 20% der Vorformlänge) gehalten werden können.

Aufgabe der Erfindung ist es daher, Maßnahmen anzugeben, mit denen bei der Herstellung optischer Vorformen nach dem PCVD-Verfahren die Bereiche nichtkonstanter Abscheidungsgeometrie an der Vorformenden (Geometrietaper) möglichst effektiv reduziert werden, die aber keine negativen Auswirkungen auf die optische Qualität der Vorformen und auf die hohen Reaktionsausbeuten haben.

Diese Aufgabe wird erfindungsgemäß dadurch gelöst, daß das Plasma im Bereich mindestens eines Umkehrpunkts zeitlich nichtlinear bewegt wird und/oder in seiner Ausdehnung in Längsrichtung des Glasrohrs zeitlich verändert wird, wobei dieser Bereich ausreichend bemessen wird, um eine effektive (weitere) Reduktion (gegenüber den Bedingungen ohne zusätzliche Maßnahmen) von Endtaperverlusten zu gewährleisten.

Die erfindungsgemäße Maßnahme beruht im wesentlichen auf dem experimentell festgestellten Befund, daß eine *Verlängerung der* — aus mechanischen Gründen minimal notwendigen — Rampenlängen zur Abbremsung und Wiederbeschleunigung der Reaktionszone an den Orten der Hubumkehr überraschenderweise (und im Gegensatz zu den bisherigen Annahmen notwendiger möglichst langer Bereiche konstanter Hubgeschwindigkeit zur Erzielung großer Plateaubereiche in den Vorformen) zu einer deutlichen Verkürzung der Endtaperlängen führen kann. Voraussetzung dafür ist allerdings, daß Ausdehnung und spezieller Verlauf der nichtlinearen Bewegungsänderung in den Bereichen der Hubumkehr den jeweiligen Abscheidungsbedingungen geeignet angepaßt sind.

Derartige nichtlineare Bewegungen im Bereich der Hubumkehrpunkte lassen sich beim PCVD-Verfahren nicht nur dadurch realisieren, daß die mechanische Bewegung des Resonators — d.h. das Hubgeschwindigkeitsprofil des Reaktors — entsprechend modifiziert wird. Im Gegensatz zu anderen Verfahren bietet das PCVD-Verfahren eine Reihe zusätzlicher spezifischer Möglichkeiten, die im wesentlichen darauf beruhen, daß sich die Ausdehnung des Plasmas und damit der lokale Abscheidungsort mit Bezug auf die Reaktorposition über Variation der Plasma-Leistung, des Drucks und der Flußbedingungen definiert verändern läßt. Erfolgt diese Variation in geeigneter Weise und synchron zur Resonatorposition in den Bereichen der Hubumkehr, so kann mit diesen Maßnahmen ebenfalls die erfindungsgemäße Wirkung einer weiteren effektiven Taperreduktion erzielt werden: Die Maßnahmen der Druck-, Leistungs- und Flußvariation bewirken ebenfalls eine nichtlineare Bewegung der Abscheidungszone über der Rohrlänge und können demzufolge jede einzeln — oder auch miteinander kombiniert — vorteilhaft angewendet werden.

Weiterhin wurde überraschenderweise gefunden, daß die Ausdehnung der lokalen Abscheidungszone beim PCVD-Verfahren praktisch unabhängig von sämtlichen Prozeßparametern (Druck, Temperatur, Mikro-

3

wellenleistung, Rohrgeometrie usw.) ist und lediglich in einfacher Weise — linear — vom totalen Gasfluß durch das zu beschichtende Rohr abhängt. Daraus resultiert der unerwartete, aber experimentell bestätigte Befund, daß die Endtaperlängen beim PCVD-Verfahren ohne Anwendung der erfindungsgemäßen Maßnahmen linear mit den totalen Gasflüssen anwachsen. Es stellte sich demzufolge als vorteilhaft heraus, daß die nichtlineare Bewegung der Reaktionszone und/oder die zeitliche Änderung der Ausdehnung des Plasmas insbesondere bei möglichst niedrigen totalen Gasflüssen durch das zu beschichtende Rohr angewendet werden.

Der Bereich, in dem das Plasma nichtlinear bewegt und/oder in seiner Ausdehnung in Längsrichtung des Glasrohrs zeitlich verändert wird, entspricht vorzugsweise 2 bis 40% der gesamten Abscheidungslänge. Kürzere Bereiche werden nicht bevorzugt, weil die erfindungsgemäße Wirkung der Taperreduktion mit kürzer werdenden Bereichen generell abnimmt und außerdem aus mechanischen Gründen die Bereiche der Abbremsung und Wiederbeschleunigung des Resonators an den Hub-Umkehrpunkten nicht zu kurz sein sollten, während längere Bereiche oberhalb 40% der Abscheidelänge nicht nötig sind, da mit Bereichen unterhalb 40% die relativen Taperverluste bereits weniger als 20% der Vorformlänge betragen, was für eine hohe Prozeßausbeute in der Regel ausreichend ist.

Zusatzlich werden bei einer vorgegebenen Hublänge für das Plasma die Glasflüsse vorzugsweise entsprechend der Beziehung

$$2.65 \leqq \left[ \frac{\dot{Q}_T}{\dot{Q}'_{SiCl_4}} \right] \cdot \left[ \frac{\dot{m}_{SiO_2}}{g/min} \right] \leqq 7.25 \cdot \left[ \frac{Z_p}{m} \right] \qquad (1)$$

eingestellt, wobei

$\dot{Q}_T$ und $\dot{Q}_{SiCl_4}$ den totalen Gasfluß und den Gasfluß von $SiO_2$-bildenden Chloriden in sccm (Kubikcentimeter pro Minute, bezogen auf Standardbedingungen von 273 K und 1013 hPa),

$\dot{m}_{SiO_2}$ die Abscheiderate von $SiO_2$ in Gramm pro Minute und

$Z_p$ die Abscheidungslänge oder Vorformlänge in m

bedeuten und $\dot{Q}_T$ im Gültigkeitsbereich der Beziehung (1) einen möglichst niedrigen Wert haben sollte.

$$\left[ \dot{Q}_T / \dot{Q}_{SiCl_4} \right]$$

ist dabei vorzugsweise $\geqq 3$ zu wählen, um eine quantitative Reaktionsausbeute zu gewährleisten. Die Wahl der Gasflüsse entsprechend Beziehung (1) stellt sicher, daß in jedem Fall die relativen Taperverluste kleiner als 20% der Vorformlänge bleiben (obere Grenze) und die Flußbedingungen Abscheideraten entsprechen, die eine Taperreduzierung aus Gründen der Prozeßökonomie notwendig machen (untere Grenze).

Ferner ist es zweckmäßig, den totalen Gasfluß auf $\dot{Q}_T \geqq 1000$ sccm und/oder den Chloridgasfluß auf $\dot{Q}_{SiCl_4} \geqq 185$ sccm (entsprechend einer Abscheiderate $\dot{m}_{SiO_2} \geqq 0,5$ g/min) einzustellen, da bei niedrigeren abgebremst bzw. beschleunigt, wobei $\dot{Q}_T$ der totale Gasfluß in sccm ist. Die Strecke $\Delta Z_R$ wird als Rampenlänge bezeichnet.

Die Hublänge des Plasmas ist vorzugsweise kleiner als oder gleich 300 cm, Größere Hublängen sind aus technischen Gründen (Rohrdeformationen beim Beschichten und Kollabieren, Abmessungen der Beschichtungsapparaturen, Hantierbarkeit der Vorformen) nur mit großen Schwierigkeiten anwendbar.

Eine weitere Ausführungsform des erfindungsgemäßen Verfahrens besteht in einer zeitlich nichtlinearen Bewegung eines das Plasma erzeugenden Mikrowellengenerators.

Vorzugsweise wird dabei der Mikrowellenresonator im Bereich der Umkehrpunkte mit linearer Geschwindigkeitsänderung über einer Strecke $\Delta Z_R$ entsprechend der Beziehung

$$2 \cdot \left[ \frac{\dot{Q}_T}{1000 \ sccm} \right] \leqq \left[ \frac{\Delta Z_R}{cm} \right] \leqq 4 \cdot \left[ \frac{\dot{Q}_T}{1000 \ sccm} \right] \qquad (2)$$

abgebremst bzw. beschleunigt, wobei $\dot{Q}_T$ der totale Gasfluß in sccm ist. Die Strecke $\Delta Z_R$ wird als Rampenlänge bezeichnet.

Insbesondere wird der Mikrowellenresonator im Bereich der Umkehrpunkte mit linearer Geschwindigkeitsänderung über einer Strecke $\Delta Z_R$ entsprechend der Beziehung

$$2. \left[\frac{\dot{Q}_T}{1000 \text{ sccm}}\right] \leqq \left[\frac{\Delta Z_R}{\text{cm}}\right] \leqq 3 \cdot \left[\frac{\dot{Q}_T}{1000 \text{ sccm}}\right] \qquad (2a)$$

abgebremst bzw. beschleunigt, wobei $Q_T$ der totale Gasfluß in sccm ist. Die Strecke $\Delta Z_R$ wird als Rampenlänge bezeichnet.

Eine weitere bevorzugte Verfahrensweise besteht in einer zeitlichen Änderung der Ausdehnung des Plasmas im Bereich der Umkehrpunkte.

Hierzu wird die Leistung des Mikrowellenresonators im Bereich der Umkehrpunkte vorzugsweise um 10 bis 50% herabgesetzt und/oder der Druck des reaktiven Gasgemisches vorzugsweise um 10 bis 100% heraufgesetzt, solange der Mikrowellenresonator sich im Bereich der Umkehrpunkte befindet. Dadurch wird bewirkt, daß — infolge der zeitlichen Änderung der Ausdehnung des Plasmas im Bereich der Umkehrpunkte — die Bewegung der Abscheidungszone nichtlinear erfolgt und demzufolge die Taperlängen erfindungsgemäß verkürzt werden.

Die Erfindung wird im nachfolgenden anhand einiger Beispiele näher erläutert.

Bei allen Ausführungsbeispielen wurden mit dem PCVD-Verfahren Vorformen mit einem Stufenindexprofil im Kernbereich hergestellt; alle Abscheidungsbedingungen — bis auf den jeweils für die Taperreduktion relevanten Parameter — wurden konstant gehalten. Im einzelnen wurden Quarzglasrohre (Außendurchmesser 18 mm, Innendurchmesser 15 mm) verwendet; die Resonatorgeschwindigkeit betrug im konstanten Bereich — über einer Hublänge von 50 cm — $8 \text{m.min}^{-1}$ und wurde an den Endpunkten über einer Rampenlänge von jeweils 1,2 cm konstant auf Null verzögert und in Rückrichtung in gleicher Form auf den Sollwert beschleunigt. Die Chloridflüsse blieben während der gesamten Abscheidungstemperatur mit $\dot{Q}_{SiCl4} = 185$ sccm und $\dot{Q}_{GeCl4} = 15$ sccm konstant, was einer Abscheiderate von etwa 0,5 $\text{g.min}^{-1}$ entsprach. Die übrigen PCVD-Parameter wurden ebenfalls auf für diese Abscheideraten optimierten Werten konstant gehalten; die Subtrattemperatur betrug 1230°C, der Abscheidungsdruck etwa 13 hPa und die eingekoppelte Mikrowellenleistung etwa 900 Watt. Die totale Zahl der abgeschiedenen Lagen von 825 entsprach dabei einer effektiven totalen Abscheidungsdauer von 53 min.

Die Vorformen wurden nach der Abscheidung kollabiert und anschließend mit einem P101-Preformanalyser bezüglich der Kerngeometrie und der optischen Brechungsindexdifferenz zwischen abgeschiedenem Kernmaterial und Substratrohr als Funktion der Vorformlänge $Z_p$ vermessen. Bei dieser Art der Messung können simultan die Lage der Abscheidung mit Bezug auf das Resonatorzentrum (bzw. die Umkehrpunkte), die geometrische Massenbelegung und der optische Brechungsindex längs der Vorform bestimmt werden. Die folgenden Resultate und Ausführungsbeispiele zeigen im wesentlichen nur den geometrischen Endtaper bzw. die Wirkung der erfindungsgemäß angewendeten Verfahren auf die Reduktion des Taperbereichs. Die Übereinstimmung der berechneten, erwarteten Werte für den Kernradius mit den experimentell gemessenen Kernradien bestätigte zusätzlich, daß die Prozeßausbeute unter allen Bedingungen der Ausführungsbeispiele quantitativ war. Veränderungen des relativen Brechungsindexunterschieds zwischen Kern und Mantel infolge der zusätzlich angewendeten Maßnahmen zur Taperreduzierung konnten im Plateaubereich ebenfalls nicht festgestellt werden.

Ausführungsbeispiel 1

Die PCVD-Abscheidung unter den oben beschriebenen Bedingungen lieferte ohne Anwendung zusätzlicher Maßnahmen zur Taperreduzierung einen geometrischen Endtaper mit einer Länge von etwa 14,5 bis 15,0 cm.

Unter diesen Bedingungen floß während der Abscheidung ein konstanter Sauerstoffstrom von $\dot{Q}_{O_2} = 1800$ sccm; der totale Fluß $\dot{Q}_T$ war demzufolge $\dot{Q}_T \approx 2000$ sccm (inclusive Chloridgasflüssen) und das $O_2/SiCl_4$-Verhältnis etwa 9:1. Ein Vergleich dieser Versuchsbedingungen und -resultate mit den erfindungsgemäß bevorzugten Daten gemäß Beziehung (1) zeigt, daß in diesem Fall die Größe

$$\left[\frac{\dot{Q}_T}{\dot{Q}_{SiCl_4}}\right] \cdot \left[\frac{\dot{m}_{SiO_2}}{g/min}\right] \approx 5,0 \overset{>}{=} 7,7 \left[\frac{Z_p}{m}\right] \approx 3,8$$

ist und demzufolge die Beziehung (1) nicht erfüllt ist, was bei einer Vorformlänge von 50 cm zu relativ hohen Taperverlusten von etwa 30% der gesamten Vorformlänge $Z_p$ führt.

Ausführungsbeispiel 2 (Reduziertes Mischungsverhältnis)

Unter sonst gleichen Bedingungen wurde gegenüber dem Ausführungsbeispiel 1 der Sauerstoffstrom von 1800 auf 1200 sccm reduziert, d.h. das $O_2/SiCl_4$-Verhältnis auf 6:1 verringert. Der Geometrietaper reduzierte sich dabei von etwa 15 cm auf nunmehr etwa 9,5 bis 10 cm. In diesem Fall wurde die Größe

EP 0 187 405 B1

$$\left[\frac{\dot{Q}_T}{\dot{Q}_{SiCl_4}}\right] \cdot \left[\frac{\dot{m}_{SiO_2}}{g/min}\right] \approx 3$$

entsprechend der Beziehung (1) eingestellt; der relative Geometrietaperverlust beträgt demzufolge nur noch maximal 20% der Vorformlänge. Die Reduzierung der Taperlänge ist dabei in erster Näherung direkt proportional der Reduktion des totalen Gasflusses. Im Rahmen der Beziehung (1) sollte demzufolge der totale Gasfluß möglichst niedrig vorgegeben werden.

Ausführungsbeispiel 3 (Vergrößerte Rampenlänge)

Eine Vergrößerung der Rampenlänge von vorher 1,2 cm auf 3,2 cm unter Beibehaltung des konstanten Abbremsens und Beschleunigens des Resonators über dieser vergrößerten Länge bewirkte eine weitere Verringerung des Geometrietapers auf etwa 5,0 cm. Die übrigen Abscheidungsbedingungen entsprachen in diesem Fall denen des Ausführungsbeispiels 2. Die Länge der Rampe wurde entsprechend der Beziehung (2) vorgegeben, was im Vergleich zum Ausführungsbeispiel 1 zu einem relativen Geometrietaper von nur noch etwa 10% (vorher etwa 30%) der Vorformlänge führt.

Ausführungsbeispiel 4 (Variation der Mikrowellenleistung)

Unter den Bedingungen entsprechend Ausführungsbeispiel 3 wurde zusätzlich die Mikrowellenleistung im Bereich der Rampenlängen synchron zur Resonatorbewegung vom Maximalwert im Plateaubereich auf etwa 80% dieses Wertes (am Umkehrpunkt) reduziert. Diese Maßnahme führte zu einer weiteren Reduktion der Taperlänge auf etwa 3 cm — d.h. auf etwa 6% der Vorformlänge $Z_p$.

Die Ausführungsbeispiele demonstrieren damit die Wirksamkeit des erfindungsgemäßen Verfahrens für eine effektive Taperreduktion beim PCVD-Verfahren: Unter Anwendung dieses Verfahrens konnte der Geometrietaper von vorher 15 cm auf nur noch etwa 3 cm — d.h. um etwa 80% — verringert werden.

**Patentansprüche**

1. Verfahren zur Herstellung von Lichtleitfasern, bei dem auf der Innenwandung eines auf eine Temperatur zwischen 1100 und 1300°C erwärmten Glasrohrs schichtweise Glas abgeschieden wird, indem ein reaktives Gasgemisch bei einem Druck zwischen 1 und 30 hPa durch das Glasrohr geleitet wird, während im Innern des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilten, von der Lichtleitfasern gezogen werden, dadurch gekennzeichnet, daß das Plasma im Bereich mindestens eines Umkehrpunkts zeitlich nichtlinear bewegt und/oder in seiner Ausdehnung in Längsrichtung des Glasrohrs zeitlich verändert wird, wobei dieser Bereich ausreichend bemessen wird, um eine effektive Reduktion von Endtaperverlusten zu gewährleisten.

2. Verfahren nach Anspruch 1, dadurch gekennzeichnet, daß der Bereich, in dem das Plasma nichtlinear bewegt und/oder in seiner Ausdehnung in Längsrichtung des Glasrohrs zeitlich verändert wird, 2 bis 40% der gesamten Abscheidungslänge entspricht.

3. Verfahren nach Anspruch 1, dadurch gekennzeichnet, daß bei einer vorgegebenen Hublänge für das Plasma die Gasflüsse entsprechend der Beziehung

$$2.65 \leqq \left[\frac{\dot{Q}_T}{\dot{Q}_{SiCl_4}}\right] \cdot \left[\frac{\dot{m}_{SiO_2}}{g/min}\right] \leqq 7.25 \cdot \left[\frac{Z_p}{m}\right] \qquad (1)$$

eingestellt werden, wobei

$\dot{Q}_T$ und $\dot{Q}_{SiCl_4}$ den totalen Gasfluß und den Gasfluß von $SiO_2$-bildenden Chloriden in sccm (Kubikzentimeter pro Minute, bezogen auf Standardbedingungen von 273 K und 1013 hPa),

$\dot{m}_{SiO_2}$ die Abscheiderate von $SiO_2$ in Gramm pro Minute und

$Z_p$ die Abscheidungslänge oder Vorformlänge in m

bedeuten und $\dot{Q}_T$ im Gültigkeitsbereich der Beziehung (1) so niedrig wie möglich gewählt wird.

4. Verfahren nach Anspruch 3, dadurch gekennzeichnet, daß das Verhältnis

$$\left[\dot{Q}_T / \dot{Q}_{SiCl_4}\right] \geqq 3$$

6

gewählt wird.

5. Verfahren nach Anspruch 3, dadurch gekennzeichnet, daß der totale Gasfluß $\dot{Q}_T \geqq 1000$ sccm ist.

6. Verfahren nach Anspruch 3, dadurch gekennzeichnet, daß der Chloridgasfluß $\dot{Q}_{SiCl_4} \geqq 185$ sccm (entsprechend einer Abscheiderate $m_{SiO_2} = 0,5$ g/min) ist.

7. Verfahren nach Anspruch 3, dadurch gekennzeichnet, daß die Hublänge $Z_p$ des Plasmas kleiner als oder gleich 300 cm ist.

8. Verfahren nach einem oder mehreren der Ansprüche 1 bis 7, gekennzeichnet durch eine zeitlich nichtlineare Bewegung eines das Plasma erzeugenden Mikrowellengenerators.

9. Verfahren nach Anspruch 8, dadurch gekennzeichnet, daß der Mikrowellenresonator im Bereich der Umkehrpunkte mit linearer Geschwindigkeitsänderung über einer Strecke $\Delta Z_R$ entsprechend der Beziehung

$$2 \cdot \left[ \frac{\dot{Q}_T}{1000 \text{ sccm}} \right] \leqq \left[ \frac{\Delta Z_R}{cm} \right] \leqq 4 \cdot \left[ \frac{\dot{Q}_T}{1000 \text{ sccm}} \right] \qquad (2)$$

abgebremst bzw. beschleunigt wird, wobei $\dot{Q}_T$ der totale Gasfluß in sccm ist.

10. Verfahren nach Anspruch 8, dadurch gekennzeichnet, daß der Mikrowellenresonator im Bereich der Umkehrpunkte mit linearer Geschwindigkeitsänderung über einer Strecke $\Delta Z_R$ entsprechend der Beziehung

$$2 \cdot \left[ \frac{\dot{Q}_T}{1000 \text{ sccm}} \right] \leqq \left[ \frac{\Delta Z_R}{cm} \right] \leqq 3 \cdot \left[ \frac{\dot{Q}_T}{1000 \text{ sccm}} \right] \qquad (2a)$$

abgebremst bzw. beschleunigt wird, wobei $\dot{Q}_T$ der totale Gasfluß in sccm ist.

11. Verfahren nach einem oder mehreren der Anspruche 1, bis 7, gekennzeichnet durch eine zeitliche Änderung der Ausdehnung des Plasmas im Bereich der Umkehrpunkte.

12. Verfahren nach Anspruch 11, dadurch gekennzeichnet, daß die Leistung des Mikrowellenresonators im Bereich der Umkehrpunkte um 10 bis 50% herabgesetzt wird.

13. Verfahren nach Anspruch 11, dadurch gekennzeichnet, daß der Druck des reaktiven Gasgemisches um 10 bis 100% heraufgesetzt wird, solange der Mikrowellenresonator sich im Bereich der Umkehrpunkte befindet.

## Revendications

1. Procédé pour la fabrication de fibres optiques, selon lequel du verre est déposé en couches sur la paroi intérieure d'un tube en verre chauffé à une température comprise entre 1100 et 1300°C pendant qu'un mélange de gaz réactif traverse le tube en verre sous une pression comprise entre 1 et 30 hPa, alors que dans le tube en verre un plasma est animé d'un mouvement alternatif par courses, après quoi, après dépôt d'une quantité de verre correspondant à la structure de fibre optique envisagée, le tube en verre est porté à affaissement afin de former une préforme massive à partir de laquelle sont étirées les fibres optiques, caractérisé en ce que le plasma est déplacé temporairement d'une façon non linéaire dans la zone d'au moins un point d'inversion et/ou est modifié temporairement pendant sa dilatation dans la direction longitudinale du tube en verre, cette zone étant dimensionnée de façon à assurer une réduction effective des pertes du cône terminal.

2. Procédé selon la revendication 1, caractérisé en ce que la zone dans laquelle le plasma se déplace de façon non linéaire et/ou est modifié pendant sa dilatation dans la direction longitudinale du tube en verre correspond à 2 à 40% de la longueur de dépôt totale.

3. Procédé selon la revendication 1, caractérisé en ce que pour une longueur de course préalablement déterminée pour le plasma, le courant de gaz est établi conformément à la relation

$$2.65 \leqq \left[ \frac{\dot{Q}_T}{\dot{Q}_{SiCl_4}} \right] \cdot \left[ \frac{\dot{m}_{SiO_2}}{g/min} \right] \leqq 7.25 \cdot \left[ \frac{Z_p}{m} \right] \qquad (1)$$

expression dans laquelle $\dot{Q}_T$ et $\dot{Q}_{SiCl_4}$ représentent le courant de gaz total et le courant de gaz des chlorures formateurs de $SiO_2$ en sccm (centimètre cubique par minute) rapportés aux conditions normées de 273 K et de 1013 hPa), $m SiO_2$ la vitesse de dépôt de $SiO_2$ en g par minute et $Z_p$ la longueur de dépôt ou la longueur de la préforme en m et

$\dot{Q}_T$ est choisi aussi bas que possible dans la portée de la relation (1).

4. Procédé selon la revendication 3, caractérisé en ce qu'on a choisi le rapport

$$\left[\dot{Q}_T / \dot{Q}_{SiCl_4}\right] \geqq 3$$

5. Procédé selon la revendication 3, caractérisé en ce que le courant de gaz total $\dot{Q} \geqq 1000$ sccm.

6. Procédé selon la revendication 3, caractérisé en ce que le courant de gaz de chlorure $\dot{Q}_{SiCl4} \geqq 185$ sccm (ce qui correspond à une vitesse de dépot $m_{SiO2} = 0,5$ g/min).

7. Procédé selon la revendication 3, caractérisé en ce que la longueur de course $Z_p$ du plasma est inférieure ou égale à 300 cm.

8. Procédé selon l'une ou plusieurs des revendications 1 à 7, caractérisé par un mouvement temporairement non linéaire d'un générateur à micro-ondes formateur du plasma.

9. Procédé selon la revendication 1, caractérisé en ce que dans la zone des points d'inversion le résonateur à micro-ondes est freiné respectivement accéléré à variation de vitesse linéaire sur un trajet $\Delta Z_R$ selon la relation

$$2 \cdot \left[\frac{\dot{Q}_T}{1000 \ sccm}\right] \leqq \left[\frac{\Delta Z_R}{cm}\right] \leqq 4 \cdot \left[\frac{\dot{Q}_T}{1000 \ sccm}\right] \qquad (2)$$

$\dot{Q}_T$ étant le flux de gaz total en sccm.

10. Procédé selon la revendication 8, caractérisé en ce que dans la zone des points d'inversion le résonateur à micro-ondes est freiné respectivement accéléré à variation de vitesse linéaire sur un trajet $\Delta Z_R$ selon la relation

$$2 \cdot \left[\frac{\dot{Q}_T}{1000 \ sccm}\right] \leqq \left[\frac{\Delta Z_R}{cm}\right] \leqq 3 \cdot \left[\frac{\dot{Q}_T}{1000 \ sccm}\right] \qquad (2a)$$

$\dot{Q}_T$ étant le courant de gaz total en sccm.

11. Procédé selon l'une ou plusieurs des revendications 1 à 7, caractérisé par une variation temporaire de la dilatation du plasma dans la zone des points d'inversion.

12. Procédé selon la revendication 11, caractérisé en ce que le rendement du résonateur à micro-ondes dans la zone des points d'inversion est réduit de 10 à 50%.

13. Procédé selon la revendication 11, caractérisé en ce que la pression du mélange de gaz réactif est augmentée de 10 à 100% tant que le résonateur à micro-ondes se trouve dans la zone des points d'inversion.

## Claims

1. Method of fabricating optical fibres, in which glass layers are deposited on the inner wall of a glass tube heated to a temperature between 1100 and 1300°C, a reactive gas mixture at a pressure between 1 and 30 hPa being conducted through the glass tube while inside the glass tube a plasma is reciprocated between two reversal points, and next, after a quantity of glass corresponding to the intended structure of the optical fibre has been deposited, the glass tube is collapsed to produce a solid preform from which optical fibres are drawn, characterized in that the plasma in the region of at least one reversal point is moved nonlinearly with time and/or is changed in its longitudinal extension along the glass tube as a function of time, this region being adequately dimensioned to ensure an effective reduction of end taper losses.

2. Method as claimed in Claim 1, characterized in that the region in which the plasma moves nonlinearly and/or changes as a function of time in its extension along the axis of the glass tube, corresponds to 2 to 40% of the total deposition length.

3. Method as claimed in Claim 1, characterized in that for a given plasma travel, the gas flows are set in accordance with the relation

$$2.65 \leqq \left[\frac{\dot{Q}_T}{\dot{Q}_{SiCl_4}}\right] \cdot \left[\frac{\dot{m}_{SiO_2}}{g/min}\right] \leqq 7.25 \cdot \left[\frac{Z_p}{m}\right] \qquad (1)$$

where

$\dot{Q}_T$ and $\dot{Q}_{SiCl_4}$ represent the total gas flow and the gas flow of SiO$_2$-forming chlorides in sccm (cubic centimetres per minute, referring to standard conditions of 273 K and 1013 hPa),

$\dot{m}_{SiO_2}$ in the deposition rate of SiO$_2$ in grammes per minute and

$Z_p$ is the deposition length or preform length in m, and in the region in which equation (1) is valid $Q_T$ should be chosen as low as possible.

4. Method as claimed in Claim 3, characterized in that the ratio

$$\left[\dot{Q}_T/\dot{Q}_{SiCl_4}\right] \geqq 3$$

is chosen.

5. Method as claimed in Claim 3, characterized in that the total gas flow $\dot{Q}_T \geqq 1000$ sccm.

6. Method as claimed in Claim 3, characterized in that the chloride gas flow $\dot{Q}_{SiCl4} \geqq 185$ sccm (corresponding to a deposition rate of $\dot{m}_{SiO_2} = 0.5$ g/min).

7. Method as claimed in Claim 3, characterized in that the distance $Z_p$ travelled by the plasma is smaller than or equal to 300 cm.

8. Method as claimed in any one of Claims 1 to 7, characterized by a nonlinear movement as a function of time of a microwave generator producing the plasma.

9. Method as claimed in Claim 8, characterized in that in the region of the reversal points the microwave resonator is slowed down or speeded up with a linear change of velocity over a distance $\Delta Z_R$ in accordance with the equation

$$2 \cdot \left[\frac{\dot{Q}_T}{1000 \text{ sccm}}\right] \leqq \left[\frac{\Delta Z_R}{cm}\right] \leqq 4 \cdot \left[\frac{\dot{Q}_T}{1000 \text{ sccm}}\right] \tag{2}$$

where $\dot{Q}_T$ is the total gas flow in sccm.

10. Method as claimed in Claim 8, characterized in that in the region of the reversal points the microwave resonator is slowed down or speeded up with a linear change of velocity over a distance $\Delta Z_R$ in accordance with the equation

$$2 \cdot \left[\frac{\dot{Q}_T}{1000 \text{ sccm}}\right] \leqq \left[\frac{\Delta Z_R}{cm}\right] \leqq 3 \cdot \left[\frac{\dot{Q}_T}{1000 \text{ sccm}}\right] \tag{2a}$$

where $\dot{Q}_T$ is the total gas flow in sccm.

11. Method as claimed in any one of Claims 1 to 7, characterized by a change in the extension of the plasma as a function of time in the region of the reversal points.

12. Method as claimed in Claim 11, characterized in that the power of the microwave resonator in the region of the reversal points is reduced by 10 to 50%.

13. Method as claimed in Claim 11, characterized in that the pressure of the reactive gas mixture is increased by 10 to 100% as long as the microwave resonator is situated in the region of the reversal points.